# EUROPEAN PATENT APPLICATION

(11) **EP 2 863 638 A1**
(43) Date of publication of application: **22.04.2015**
(21) Application number: 13275249.4
(22) Date of filing: 17.10.2013
(51) Int. Cl.: H04N 19/179, H04N 19/117, H04N 19/132, H04N 19/167, H04N 19/59, H04N 19/587

(54) **A method of reducing video content of a video signal of a scene for communication over a communications link**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method of reducing video content of a video signal of a scene, for communication over a communications link is disclosed. The method comprises receiving the video content of the scene from a scene imager, the video content comprising a sequence of first video frames, defining a region of interest within the imaged scene, applying a spatial frequency reduction of the imaged scene of each video frame, outside of the region of interest, to form a sequence of second video frames comprising a reduced spatial resolution outside of the region of interest compared with the first video frames, and applying a compression algorithm to the video content of the sequence of second video frames, to compress the video content for communication over the communication link. A communication system and method are also disclosed for communicating the compressed video signal.

## Description

The present invention relates to a method of reducing video content of a video signal of a scene for communication over a communications link.

Surveillance vehicles, such as aircraft, are typically used to communicate video images of a scene, in order to acquire information about the scene. The vehicles comprise a video camera or other scene imager for acquiring a video signal of the scene and this signal is then communicated to a remote location for remote monitoring and processing. However, video signals typically require a significant communication bandwidth (several Megabits per second), since the video signal content will comprise a large amount of video content which must be communicated at a minimum rate in order that the video image may be suitably viewed. In the event that the video content is transmitted too slowly or is otherwise delayed in transit at a bottleneck in the communications link for example, then the video image may appear frozen or features of the image may appear displaced.

The provision of high bandwidth video often requires the use of a large antenna and thus a large power source, and this can have a significant effect when the antenna is mounted on an aircraft with a limited power supply.

According to a first aspect of the present invention there is provided a method of reducing video content of a video signal of a scene, for communication over a communications link, the method comprising:
- receiving the video content of the scene from a scene imager, the video content comprising a sequence of first video frames;
- defining a region of interest within the imaged scene;
- applying a spatial frequency reduction of the imaged scene of each video frame, outside of the region of interest, to form a sequence of second video frames comprising a reduced spatial resolution outside of the region of interest compared with the first video frames;
- applying a compression algorithm to the video content of the sequence of second video frames, to compress the video content for communication over the communication link.

Advantageously, the method provides for an improved reduction in video content compared with the traditional compression techniques, by reducing the video content prior to compression, but without sacrificing the quality of the important regions of the imaged scene by defining a region of interest.

Preferably, the method comprises receiving the video content of the scene from the scene imager as a first sequence of video frames and further comprises selectively removing first video frames from the first sequence to create a second sequence of first video frames comprising less video frames than the first sequence.

The method further comprises applying the spatial frequency reduction to the second sequence of first video frames to form a second sequence of the second video frames and applying the compression algorithm to the video content of the second sequence of second video frames.

In an embodiment, the compression algorithm comprises a H.264 compression algorithm. In an alternative embodiment, the compression algorithm comprises a MPEG.4 compression algorithm.

According to a second aspect of the present invention, there is provided a method of communicating video content of a scene over a communications link, the method comprising the method of reducing the video content of the video signal according to the first aspect, the method of communicating video content further comprising:
- communicating the compressed video content across the communications link;
- applying a decompression algorithm to the communicated video content to decompress the sequence of second video frames;
- interpolating the decompressed sequence of second video frames to create a sequence of third video frames, the sequence of third video frames comprising the decompressed sequence of second video frames interspersed with interpolated video frames.

The method advantageously comprises defining the region of interest in dependence of the viewed sequence of third video frames. In this respect, it may become apparent when viewing the image of the scene that the region of interest, namely that requiring the most detail, should be repositioned or that an alternative or additional region of interest may be required. Similarly, the frames removed from the first sequence to define the second sequence are selected in dependence of the viewability of the sequence of third video frames. For example, it may be necessary to remove more first video frames from the sequence in order to further reduce the video content of the communicated signal to minimise any data bottlenecks occurring in the communication system which may otherwise impair the viewability of the communicated video signal. Alternatively, it may be necessary to remove less first video frames from the sequence in order to improve the accuracy of the subsequent interpolation process and thus the accuracy of the viewed video signal.

Preferably the sequence of third video frames comprises substantially the same number of video frames as the sequence of first video frames.

The decompression algorithm may comprise a H.264 or MPEG-4 decompression algorithm.

According to a third aspect of the present invention there is provided a method of reducing video content of a video signal of a scene, for communication over a communications link, the method comprising:
- receiving the video content of the scene from a scene imager, the video content comprising a first sequence of video frames;
- selectively removing video frames from the first sequence to create a second sequence of video frames, the second sequence comprising less video frames than the first sequence; and
- applying a video compression algorithm to the video content of the second sequence of video frames to compress the video content for communication over the communication link.

Preferably, the method further comprises defining a region of interest within the imaged scene and applying a spatial frequency reduction of the imaged scene of each video frame of the second sequence, outside of the region of interest, to form a second sequence of modified video frames comprising a reduced spatial resolution outside of the region of interest compared with the unmodified video frames of the second sequence.

The method further comprises applying the video compression to the video content of the second sequence of modified video frames.

In an embodiment, the compression algorithm comprises a H.264 compression algorithm. In an alternative embodiment, the compression algorithm comprises a MPEG.4 compression algorithm.

According to a fourth aspect of the present invention, there is provided a method of communicating video content of a scene over a communications link, the method comprising the method of reducing the video content of the video signal according to the third aspect, the method of communicating video content further comprising:
- communicating the compressed video content across the communications link;
- applying a decompression algorithm to the communicated video content to decompress the second sequence of video frames;
- interpolating the decompressed second sequence of video frames to create a third sequence of video frames, the third sequence of video frames comprising the decompressed second sequence of modified video frames interspersed with interpolated video frames.

The frames removed from the first sequence to define the second sequence are advantageously selected in dependence of the viewability of the third sequence of video frames. For example, it may be necessary to remove more first video frames from the sequence in order to further reduce the video content of the communicated signal to minimise any data bottlenecks occurring in the communication system which may otherwise impair the viewability of the communicated video signal. Alternatively, it may be necessary to remove less first video frames from the sequence in order to improve the accuracy of the subsequent interpolation process and thus the accuracy of the viewed video signal. Similarly, the method advantageously comprises defining the region of interest in dependence of the viewed third sequence of video frames. In this respect, it may become apparent when viewing the image of the scene that the region of interest, namely that requiring the most detail, should be repositioned or that an alternative or additional region of interest may be required.

Preferably, the third sequence of video frames comprises substantially the same number of video frames as the first sequence.

The decompression algorithm may comprise a H.264 or MPEG-4 decompression algorithm.

According to a fifth aspect of the present invention there is provided a communication system for communicating video content of a scene over a communications link, the system comprising:
- a scene imager for imaging the scene and generating a video signal comprising a sequence of video frames;
- a transmitter for transmitting the compressed video data;
- a receiver for receiving the compressed video data; and,
- a processor for implementing the steps associated with the method according to the second or fourth aspects.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

Embodiments of the present invention will now be described by way of example only and with reference to the accompanying drawings, in which:
Figure 1 is a schematic illustration of a communication system for communicating video content of a scene over a communications link according to an embodiment of the present invention;
Figure 2 is a flowchart outlining the sequence of steps associated with a method of reducing the video content according to an embodiment of the present invention;
Figure 3 is a flowchart outlining the sequence of steps associated with a method of communicating video content of a scene over a communications link according to an embodiment of the present invention;
Figure 4 is a flowchart outlining the sequence of steps associated with a method of communicating video content of a scene over a communications link according to a further embodiment of the present invention.

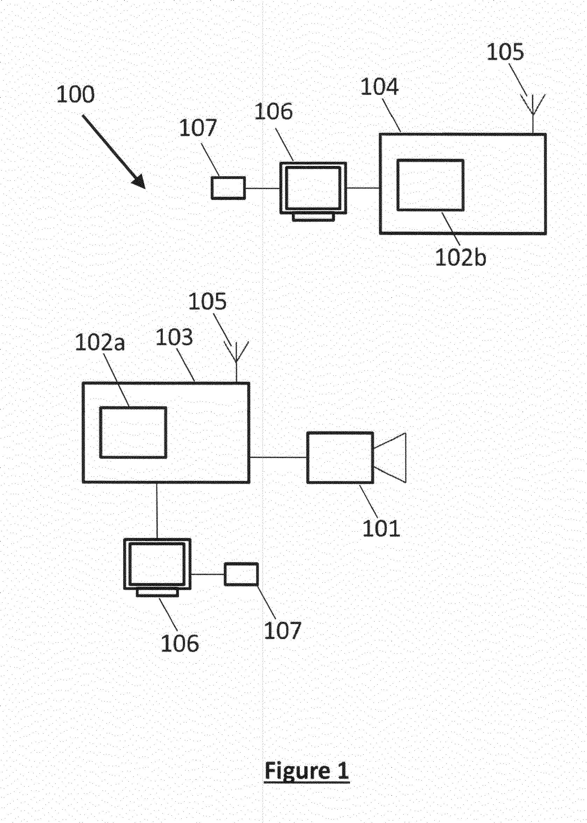

Referring to figure 1 of the drawings there is illustrated a communication system 100 according to an embodiment of the present invention for communicating video content of a scene (not shown) over a communications link, so that the video image of the scene may be viewed at a location remote to the scene. The system 100 comprises a scene imager 101, such as a video camera, for imaging the scene and generating a video signal. The video signal is typically comprises a large amount of video content requiring a high bandwidth video stream, namely a video stream requiring the transfer of large amounts of data per unit time, such as 5Mbps (megabits per second). The video content is distributed over a number of video frames associated with the signal, each frame comprising a static image of the scene. These video frames are typically communicated at a sufficient rate, such as 25fps (frames per second), to create a viewable dynamic video image of the scene.

The video signal generated by the imager 101 is communicated to a processor 102 of the system, for processing the video content of the signal according to an embodiment of a method of the present invention, in preparation for the transmission of the signal from a transmitter 103, and also for processing the video content of the communicated signal received at a receiver 104, for subsequent viewing of the scene. In this respect, the transmitter 103 and receiver 104 may comprise a respective processor 102a, 102b, or share a common processor.

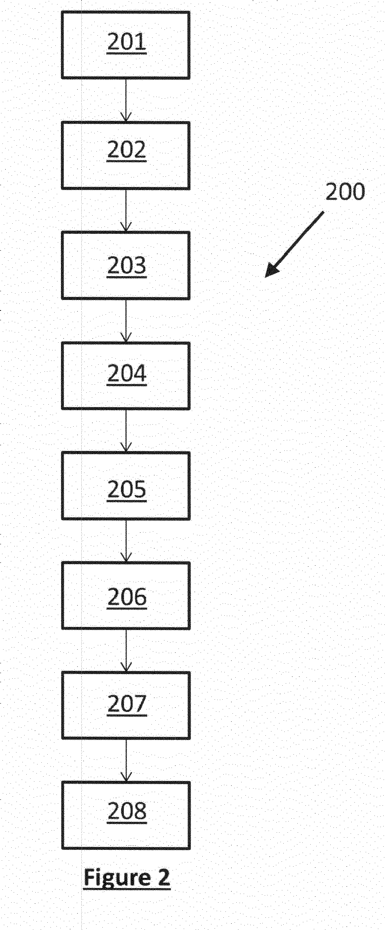

Referring to figure 2 of the drawings, there is provided a flowchart illustrating the steps associated with a method 200 of reducing video content of a video signal of a scene according to a first embodiment of the present invention, in preparation for communication over a communications link, which may comprise a communication cable (not shown) or a wireless communications link 105, using the communication system 100. The method 200 comprises initially receiving the raw video signal of the scene from the scene imager at the processor 102a, at step 201. The raw video signal may be viewed at this time at step 202 using a display device 106 located proximate to the scene imager 101 and thus the scene, to establish an initial region or regions of interest within the scene, such as a door way to a house, a vehicle or other area within the scene requiring particular attention, at step 203. It is envisaged that the region of interest may be defined using an input device 107, such as a computer mouse or similar, by forming a computer generated boundary around the region of interest. The boundary may be sized and positioned to accommodate the or each region using the input device 107.

The video signal from the scene imager 101 will comprise a sequence of first or unmodified video frames each showing a static image of the scene comprising the region or regions of interest. The video content of each frame is subsequently subject to a spatial frequency reduction at step 204, to reduce the spatial resolution of the imaged scene within each frame, but only outside the regions of interest. The areas of the imaged scene within the boundary, namely the regions of interest, are not subject to this spatial frequency reduction and thus maintain the relatively higher spatial resolution. The spatial frequency reduction thus creates a sequence of second or modified video frames having a reduced video content compared with the first or unmodified video frames, at step 205.

The video content of the video signal comprising the sequence of modified video frames (at typically 25fps) is then further reduced by removing selected frames at step 206, such as every 3^{rd} or 5^{th} frame from the sequence, to generate a modified sequence of modified video frames having a lower video frame rate, such as 5fps, at step 207. The modified sequence is then subject to a video compression algorithm, such as the H.264 or MPEG-4 compression, at step 208, to further reduce the video content for communication over the communication link. However, the video compression applied here is applied to a video signal comprising an already reduced video content, namely a video content comprising a reduced spatial resolution outside regions of interest, and a reduced number of video frames. Accordingly, the video content reduction and subsequent compression is found to offer a 15x reduction in bandwidth, namely a reduction in the amount of data that is required to be communicated per unit time. For example, a typical 3Mbps video stream can be reduced to under a few hundred kbps and thus the video stream can be communicated using a reduced bandwidth than is typical of video communication.

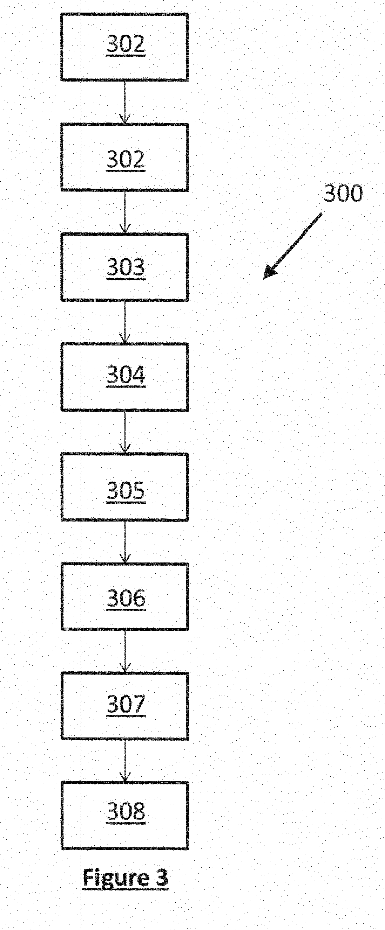

Referring to figure 3 of the drawings, there is illustrated a method 300 of reducing video content according to a second embodiment of the present invention. The method of the second embodiment comprises first receiving the raw video signal from the scene imager 101 at step 301 and subsequently viewing the video signal upon a display device 106 at step 302 to defining one or more regions of interest within the imaged scene at step 303, similar to the method 200 of the first embodiment. However, in contrast with the method 200 of the first embodiment, the method 300 of the second embodiment comprises the subsequent step of removing video frames from the raw video signal from the scene imager 101 at step 304 to create the modified sequence of video frames at step 305. The method 300 of the second embodiment subsequently comprises applying the spatial frequency reduction to the modified sequence of video frames at step 306 to create the modified sequence of modified video frames at step 307, and then subjecting the modified sequence of modified video frames to the H.264 or MPEG-4 video compression algorithm at step 308 for subsequent communication over the communications link.

The reader will thus recognise that the method 300 of the second embodiment differs from the method 200 of the first embodiment in the order of which the video signal from the scene imager 101 is subject to the step of applying the spatial frequency reduction and the step of the selective removal of video frames. Again however, the method of the second embodiment is found to offer approximately a 15x reduction in bandwidth.

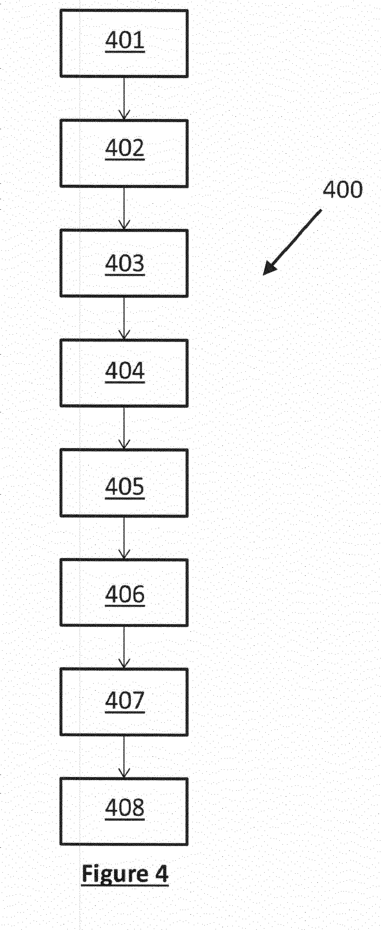

Referring to figure 4 of the drawings, there is illustrated a method 400 of communicating video content of a scene over a communications link 105, the method 400 comprises initially reducing the video content of the video signal according to the method 200, 300 of first or second embodiment described above at step 401, and then communicating the compressed video content from the transmitter 103 to the receiver 104 of the communication system 100 at step 402. Upon receiving the video signal comprising the compressed video content, the receiver 104 first processes the video signal to decompress the video content at step 403, by applying the complimentary H.264 or MPEG-4 decompression algorithm to recover the reduced frame rate video signal, namely the modified sequence of modified video frames, at step 404.

The reduced frame rate video signal is then subject to a frame up-scaling process to improve the viewability of the communicated video signal, since viewing a video signal comprising only 5fps may be "jumpy" or present scene features which appear displaced, and as such the reduced frame rate video signal may not offer a useful dynamic view of the scene. Accordingly, the frame rate of the signal is up-scaled by interpolating the modified sequence of modified video frames at step 405, to generate a further sequence of video frames at step 406 comprising the modified video frames interspersed with video frames generated by interpolating the video content of adjacent modified video frames.

The further sequence of video frames enables a more user friendly viewing of the scene compared with the viewing of the modified sequence of modified video frames. However, the communication link 105 between the receiver 104 and the transmitter 103, may be used to refine the viewed video signal at step 407. For example, in the event that the video image does not appear correctly, possibly because of a data bottleneck in the communications link 105, then instructions may be communicated over the communications link 105 from the receiver 104 to the processor 102a of the transmitter 103 to remove further video content from the video signal prior to compression, such as by removing further frames or by further reducing the spatial resolution outside the regions of interest. Conversely, in the event that the video signal reconstructed at the receiver 104 for viewing appears "jumpy" or features of the imaged scene appear displaced, then instructions may be communicated from the receiver 104 to the processor of the transmitter 103 to remove less video frames from the raw video signal prior to compression, since more video frames will provide for a more accurate interpolation of the video content of the modified sequence of modified video frames. It is also envisaged that the communications link 105 may be used as a feedback link from the receiver 104 to the transmitter 103 to enable a user, located at a remote site to the scene, to reposition or re-size the region of interest, or include alternative regions of interest in the imaged scene, substantially in real time, at step 408.

From the foregoing therefore, it is evident that the above described system and methods offer an improved reduction of video content of a video signal and thus and an improved streaming of video content over a communications link.

## Claims

1. A method of reducing video content of a video signal of a scene, for communication over a communications link, the method comprising:
- receiving the video content of the scene from a scene imager, the video content comprising a sequence of first video frames;
- defining a region of interest within the imaged scene;
- applying a spatial frequency reduction of the imaged scene of each video frame, outside of the region of interest, to form a sequence of second video frames comprising a reduced spatial resolution outside of the region of interest compared with the first video frames;
- applying a compression algorithm to the video content of the sequence of second video frames, to compress the video content for communication over the communication link.

2. A method of reducing video content of a video signal of a scene according to claim 1, further comprising receiving the video content of the scene from the scene imager as a first sequence of video frames and further comprises selectively removing first video frames from the first sequence to create a second sequence of first video frames comprising less video frames than the first sequence.

3. A method of reducing video content of a video signal of a scene according to claim 2, further comprising applying the spatial frequency reduction to the second sequence of first video frames to form a second sequence of the second video frames.

4. A method of reducing video content of a video signal of a scene according to claim 3, further comprising applying the compression algorithm to the video content of the second sequence of second video frames.

5. A method of communicating video content of a scene over a communications link, the method comprising the method of reducing the video content of the video signal according to any preceding claim, the method of communicating video content further comprising:
- communicating the compressed video content across the communications link;
- applying a decompression algorithm to the communicated video content to decompress the sequence of second video frames;
- interpolating the decompressed sequence of second video frames to create a sequence of third video frames, the sequence of third video frames comprising the decompressed sequence of second video frames interspersed with interpolated video frames.

6. A method of communicating video content of a scene over a communications link according to claim 5, the method further comprising defining the region of interest in dependence of the viewed sequence of third video frames.

7. A method of communicating video content of a scene over a communications link according to claim 5 or 6, wherein the sequence of third video frames comprises substantially the same number of video frames as the sequence of first video frames.

8. A method of reducing video content of a video signal of a scene, for communication over a communications link, the method comprising:
- receiving the video content of the scene from a scene imager, the video content comprising a first sequence of video frames;
- selectively removing video frames from the first sequence to create a second sequence of video frames, the second sequence comprising less video frames than the first sequence; and
- applying a video compression algorithm to the video content of the second sequence of video frames to compress the video content for communication over the communication link.

9. A method of reducing video content of a video signal of a scene according to claim 8, the method further comprising defining a region of interest within the imaged scene and applying a spatial frequency reduction of the imaged scene of each video frame of the second sequence, outside of the region of interest, to form a second sequence of modified video frames comprising a reduced spatial resolution outside of the region of interest compared with the unmodified video frames of the second sequence.

10. A method of reducing video content of a video signal of a scene according to claim 9, further comprising applying the video compression to the video content of the second sequence of modified video frames.

11. A method of communicating video content of a scene over a communications link, the method comprising the method of reducing the video content of the video signal according to any of claims 8 to 10, the method of communicating video content further comprising:
- communicating the compressed video content across the communications link;
- applying a decompression algorithm to the communicated video content to decompress the second sequence of video frames;
- interpolating the decompressed second sequence of video frames to create a third sequence of video frames, the third sequence of video frames comprising the decompressed second sequence of modified video frames interspersed with interpolated video frames.

12. A method of communicating video content of a scene over a communications link according to claim 11, wherein the third sequence of video frames comprises substantially the same number of video frames as the first sequence.

13. A communication system for communicating video content of a scene over a communications link, the system comprising:
- a scene imager for imaging the scene and generating a video signal comprising a sequence of video frames;
- a transmitter for transmitting the compressed video data;
- a receiver for receiving the compressed video data; and,
- a processor for implementing the steps associated with the method according to any of claims 5 to 7 or 11 to 12.
